# EUROPÄISCHE PATENTSCHRIFT

(11) **EP 0 988 181 B1**
(45) Veröffentlichungstag und Bekanntmachung des Hinweises auf die Patenterteilung: **20.08.2003**
(21) Anmeldenummer: 98936121.7
(22) Anmeldetag: 09.06.1998
(51) Int. Cl.: B60R 21/00, B60R 21/32

(54) **AUSWERTEEINRICHTUNG FÜR EINE VORRICHTUNG ZUR OBJEKTERKENNUNG, INSBESONDERE ZUR INNENRAUMÜBERWACHUNG IN EINEM KRAFTFAHRZEUG, SOWIE VORRICHTUNG ZUR OBJEKTERKENNUNG MIT EINER SOLCHEN AUSWERTEEINRICHTUNG UND VERFAHREN ZUM STEUERN EINER SOLCHEN VORRICHTUNG**
EVALUATION DEVICE FOR AN OBJECT RECOGNITION DEVICE, SPECIALLY FOR MONITORING THE INTERIOR OF A MOTOR VEHICLE, OBJECT RECOGNITION DEVICE FITTED WITH ONE SUCH EVALUATION DEVICE AND METHOD FOR CONTROLLING SUCH A DEVICE
DISPOSITIF D'EVALUATION POUR DISPOSITIF DE RECONNAISSANCE D'OBJETS, EN PARTICULIER POUR LA SURVEILLANCE DE L'ESPACE INTERIEUR D'UN VEHICULE A MOTEUR, DISPOSITIF DE RECONNAISSANCE D'OBJETS POURVU D'UN TEL DISPOSITIF D'EVALUATION, ET PROCEDE DE COMMANDE D'UN TEL DISPOSITIF DE RECONNAISSANCE D'OBJETS

(30) Priorität: 09.06.1997 DE 19724216
(43) Veröffentlichungstag der Anmeldung: 29.03.2000
(73) Patentinhaber: SIEMENS AKTIENGESELLSCHAFT, 80333 München (DE); Koninklijke Philips Electronics N.V., 5621 BA Eindhoven (NL)
(72) Erfinder: SCHMID, Reinhard, D-92709 Moosbach (DE); SWART, Marten, D-93083 Obertraubling (DE); HAMPERL, Reinhard, D-93096 Koefering (DE); PIETSCH, Arnulf, D-93049 Regensburg (DE); BOEZEN, Hendrik, NL-6531 MG Nijmegen (NL)
(74) Vertreter: Berg, Peter, Dipl.-Ing.
(86) Internationale Anmeldenummer: DE9801570
(87) Internationale Veröffentlichungsnummer: WO98056617

(56) Entgegenhaltungen:
- EP-A- 0 650 869
- DE-A- 3 001 780
- DE-A- 3 627 241
- US-A- 5 345 402
- US-A- 5 433 101
- US-A- 5 618 056

## Beschreibung

Auswerteeinrichtung für eine Vorrichtung zur Objekterkennung, insbesondere zur Innenraumüberwachung in einem Kraftfahrzeug, sowie Vorrichtung zur Objekterkennung mit einer solchen Auswerteeinrichtung und Verfahren zum Steuern einer solchen Vorrichtung

Die Erfindung betrifft eine Auswerteeinrichtung zur Verwendung in einer Vorrichtung zur Objekterkennung insbesondere zur Innenraumüberwachung für ein Kraftfahrzeug, mit einer Demodulationseinrichtung, der an einem ersten Eingang ein erstes Eingangssignal zugeführt wird und die an ihrem Ausgang ein Nutzsignal bereitstellt, mit einem Trägersignalgenerator, der mit einem zweiten Eingang der Demodulationseinrichtung verbunden ist, und mit einem Auswerter, der mit dem Ausgang der Demodulationseinrichtung verbunden ist und der derart ausgebildet ist, dass er das Objekt erkennt, wenn das Nutzsignal ein objektspezifisches Signal enthält. Die Erfindung betrifft weiter eine Vorrichtung zur Objekterkennung, insbesondere zur Innenraumüberwachung eines Kraftfahrzeugs, mit einer Auswerteeinrichtung. Die Erfindung betrifft weiter ein Verfahren zum Steuern einer Vorrichtung zur Objekterkennung, insbesondere zur Innenraumüberwachung in einem Kraftfahrzeug.

Eine solche Auswerteeinrichtung, eine solche Vorrichtung und ein solches Verfahren sind aus der US-A- 5,618,056 bekannt.

In Ausnahmesituationen können Insassenschutzvorrichtungen wie Airbags Insassen eines Fahrzeugs nicht nur vor den gesundheitlichen Folgen eines Aufpralls schützen sondern auch eine Gefahr für die Insassen darstellen: Nimmt ein Insasse in seinem Fahrzeugsitz eine ungewöhnlich weit in Richtung Armaturenbrett vorverlagerte Position ein und erfolgt ein Aufprall, so wird insbesondere der Kopf des Insassen durch das stoßartige Aufblasen des Airbags mit voller Wucht von diesem getroffen. Die Verletzungsgefahr durch den Airbag kann unter diesen Umständen größer sein als seine Schutzwirkung. Eben dieser Verletzungsgefahr ist auch ein Kleinkind in einem Kindersitz ausgesetzt, insbesondere wenn der Kindersitz mit seiner Rückenlehne dem Armaturenbrett zugewendet auf dem Beifahrersitz angeordnet ist (Reboard-Kindersitz). Weist also ein Insasse oder ein Kindersitz einen zu geringen Abstand zu einer Austrittsöffnung des Airbags auf, so soll der Airbag nicht oder nur gemindert aktiviert werden.

Zum anderen ist es vorteilhaft einen belegten von einem nicht belegten Fahrzeugsitz unterscheiden zu können, um das Auslösen des dem Fahrzeugsitz zugeordneten Insassenschutzmitteles zu verhindern: Unnötige Reparaturkosten für das Auswechseln einer Airbageinrichtung in Folge einer nicht erforderlichen Auslösung können durch eine entsprechende Vorrichtung zur Objekterkennung, insbesondere zur Erkennung eines Insassen oder eines Kindersitzes, vermieden werden.

Die bekannte Vorrichtung zur Kindersitzerkennung in einem Kraftfahrzeug (US-A-5,618,056 bzw. EP-A-0 708 002) weist eine Sendeantenne und zwei Empfangsantennen auf, die im Fahrzeugsitz angebracht sind. Eine Auswerteeinrichtung regt die Sendeantenne mit einem Trägersignal zum Aussenden eines elektromagnetischen Feldes an. Ein auf dem Fahrzeugsitz angeordneter Kindersitz weist zwei Resonatoren/Transponder auf, die das von der Sendeantenne erzeugte elektromagnetische Feld in charakteristischer Weise verändern. Die mit der Sendeantenne magnetisch gekoppelten Empfangsantennen nehmen das durch die Resonatoren im Kindersitz charakteristisch veränderte Meßfeld auf und liefern das derart modulierte Trägersignal als Eingangssignal an die Auswerteeinrichtung. Die Auswerteeinrichtung enthält eine Demodulationseinrichtung, die das Eingangssignal demoduliert. Anhand der Auswertung des so gewonnenen Nutzsignals durch einen Auswerter wird erkannt, ob ein Kindersitz im Umfeld des Fahrzeugsitzes angeordnet ist oder nicht.

Die Demodulationseinrichtung liefert bei Nichterkennen eines Kindersitzes vorzugsweise ein Nutzsignal ohne charakteristische Eigenschaften, insbesondere ein Nullsignal, da das durch die Sendeantenne ausgegebene Trägersignal unmoduliert auf die Empfangsantenne eingekoppelt wird. Die Demodulation dieses unmodulierten Trägersignals liefert gewöhnlich ein Nullsignal. Ist jedoch beispielsweise die Sendeantenne oder die Empfangsantenne, die Demodulationseinrichtung selbst oder ein zwischen Empfangsantenne und Demodulationseinrichtung angeordnetes Bauelement defekt, so liefert die Demodulationseinrichtung ebenfalls ein Nullsignal, das von dem Auswerter als nicht vorhandener Kindersitz interpretiert wird.

Aufgabe der Erfindung ist es deshalb, eine Auswerteeinrichtung für eine Vorrichtung zur Objekterkennung und insbesondere zur Innenraumüberwachung in einem Kraftfahrzeug zu schaffen, wie auch eine Vorrichtung mit einer solchen Auswerteeinrichtung und ein Verfahren zum Steuern eine solchen Auswerteeinrichtung, die/das zuverlässig einen Defekt von einem nicht erkannten Objekt zu unterscheiden weiß.

Der die Auswerteeinrichtung betreffende Teil der Erfindungsaufgabe wird mit den Merkmalen des Anspruchs 1 gelöst. Neben dem Ableiten des Nutzsignals aus dem an die Auswerteeinrichtung gelieferten Eingangssignal unter Zuhilfenahme eines Trägersignals ist die Demodulationseinrichtung auch dahingehend ausgebildet, daß das Eingangssignal unter Zuhilfenahme eines mit einem Hilfssignals modulierten Trägersignals zum Ableiten eines Prüfsignals demoduliert werden kann. Der auf die Demodulationseinrichtung folgende Auswerter wertet das Nutzsignal bzw das Prüfsignal aus. Der Auswerter erkennt durch Auswertung des Nutzsignals das ggf vorhandene Objekt. Durch Auswertung des Prüfsignals wird erkannt, ob eine Funktionsstörung vorliegt.

Der die Vorrichtung betreffende Teil der Erfindungsaufgabe wird mit den Merkmalen des Anspruchs 9 gelöst. Dabei liefert eine Empfangsantenne das Eingangssignal an die vorbeschriebene erfindungsgemäße Auswerteeinrichtung.

Anspruch 11 löst mit seinen Merkmalen den das Verfahren betreffenden Teil der Erfindungsaufgabe. Ein Trägersignal wird über eine Sendeantenne der Vorrichtung ausgegeben. Das Trägersignal wird durch das zu erkennende Objekt mit einem objektspezifischen Signal moduliert. Das modulierte Trägersignal wird von einer mit der Sendeantenne gekoppelten Empfangsantenne als Eingangssignal aufgenommen. Das Eingangssignal wird mit dem Trägersignal demoduliert, wobei das Objekt erkannt wird, wenn das mit dem Trägersignal demodulierte Eingangssignal das objektspezifische Signal enthält. Das Eingangssignal wird mit einem mit einem Hilfssignal modulierten Trägersignal demoduliert, wenn das mit dem Trägersignal demodulierte Eingangssignal das objektspezifische Signal nicht enthält. Eine Funktionsstörungwird erkannt, wenn das mit dem modulierten Trägersignal demodulierte Eingangssignal das Hilfssignal nicht enthält.

Der Vorteil der Erfindung liegt darin, daß ein nicht erkanntes Objekt von einem Defekt der Auswerteeinrichtung bzw der Vorrichtung unterschieden werden kann, sofern der Defekt eines der dem Auswerter vorgeschalteten Bauelemente der Vorrichtung betrifft, also insbesondere Antennen oder Demodulationsschaltung. Ergibt die Auswertung des Nutzsignals, daß es keine für ein Objekt charakteristische Signalform, also kein objektspezifisches Signal enthält, so wird in einem weiteren Schritt das Eingangssignal der Auswerteeinrichtung mit dem nun aber seinerseits modulierten Trägersignal demoduliert. Erkennt der Auswerter in dem derart gebildeten Prüfsignal das Hilfssignal, mit dem das Trägersignal moduliert wurde, so ist das System nicht defekt. Gleichzeitig wird kein Objekt erkannt. In diesem Fall entspricht das Eingangssignal dem Trägersignal, das im folgenden unter Zuhilfenahme des modulierten Trägersignals demoduliert wird, so daß das modulierende Signal, eben das Hilfssignal, im Prüfsignal erkannt wird. Wird das Hilfssignal jedoch nicht im Prüfsignal erkannt, so liegt ein Defekt der Vorrichtung vor. Beispielsweise ist die Empfangsantenne unterbrochen, so daß das Eingangssignal gleich einem Nullsignal ist.

Abhängig von der Auswertung des Prüfsignals gibt der Auswerter voneinander unterscheidbare Ausgangssignale ab. Die Erfindung gestattet ferner, daß die Überprüfung eines Vorrichtungsdefekts ohne großen schaltungstechnischen Aufwand erreicht werden kann. So sind keine Strom- oder Spannungsmeßvorrichtungen erforderlich. Alleine durch das Steuern der Demodulationseinrichtung und die ggf softwaretechnische Auswertung ihres Ausgangssignals kann ein Defekt erkannt werden.

Vorteilhafte Weiterbildungen der Erfindung sind durch die von den nebengeordneten Ansprüchen abhängenden Unteransprüche gekennzeichnet.

Die Erfindung und ihre Weiterbildungen werden im folgenden anhand der Zeichnung in weiteren Einzelheiten erläutert. Es zeigen:
- Figur 1: ein Blockschaltbild einer erfindungsgemäßen Vorrichtung mit einer erfindungsgemäßen Auswerteeinrichtung,
- Figur 2: die schematische räumliche Darstellung einer erfindungsgemäßen Vorrichtung zum Erkennen eines auf einem Fahrzeugsitz abgestellten Kindersitzes in einem Kraftfahrzeug, und
- Figur 3: ein Ablaufdiagramm des erfindungsgemäßen Verfahrens.

Die Erfindung wird im folgenden anhand einer Vorrichtung zur Kindersitzerkennung in einem Kraftfahrzeug erläutert. Es versteht sich jedoch, daß die Erfindung auch bei jeder anderen Vorrichtung zur Objekterkennung zum Tragen kommt. Vorzugsweise findet die Erfindung Verwendung bei Vorrichtungen zur Innenraumerkennung in einem Kraftfahrzeug, insbesondere in einer Vorrichtung zur Kindersitzerkennung oder einer Vorrichtung zur Insassenerkennung. Die Erfindung findet überall dort vorteilhafte Anwendung, wo ein zu erkennendes Objekt in charakteristischer Weise ein Meßfeld/Sendesignal verändert. Das Meßfeld kann dabei pulsweise oder dauerhaft während des Betriebes der Vorrichtung oder bei Initialisierung ausgegeben werden.

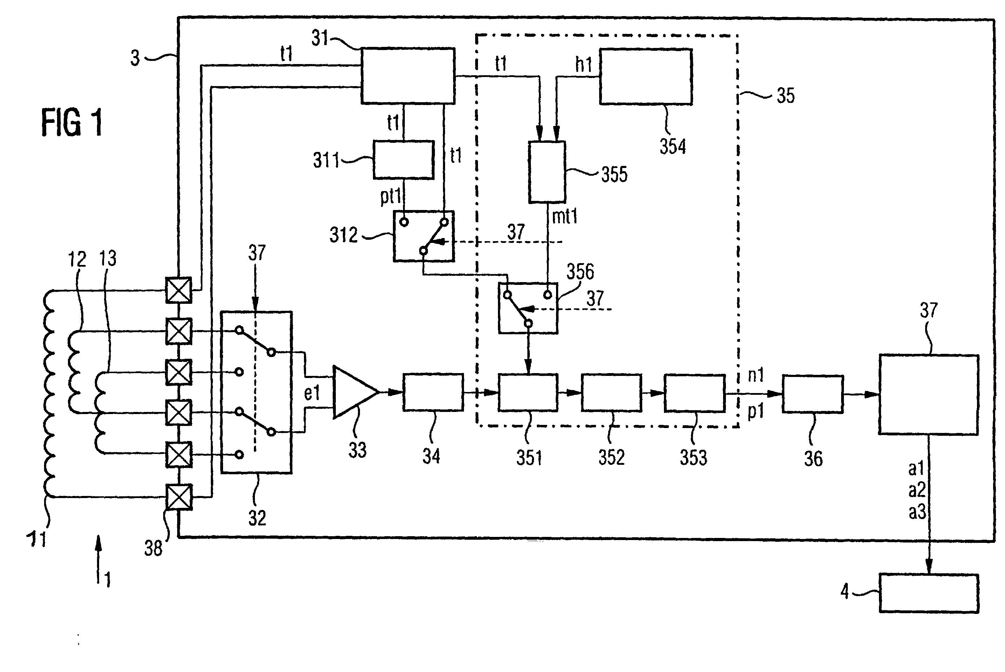

Figur 1 zeigt eine erfindungsgemäße Vorrichtung zum Erkennen eines auf einem Fahrzeugsitz abgestellten Kindersitzes. Die Vorrichtung enthält eine Antennenvorrichtung 1 mit einer Sendeantenne 11, einer ersten Empfangsantenne 12 und einer zweiten Empfangsantenne 13. Die Antennen 11, 12 und 13 sind mit Anschlüssen 38 einer Auswerteeinrichtung 3 verbunden. Dabei sind die Empfangsantennen 12 und 13 mit einem Multiplexer 32 der Auswerteeinrichtung 3 elektrisch verbunden. Dem Multiplexer 32 nachgeschaltet ist ein Verstärker 33 und ein Tiefpaßfilter 34. Das Tiefpaßfilter 34 ist elektrisch mit einer Demodulationseinrichtung 35 verbunden, der ein weiterer Verstärker 36 und ein Auswerter 37 nachgeschaltet sind. Der Auswerter 37 ist elektrisch mit einem Airbag-Steuergerät 4 verbunden.

Die Demodulationseinrichtung 35 enthält einen Multiplizierer 351, ein Tiefpaßfilter 352 und ein Hochpaßfilter 353. Der Multiplizierer 351 ist einerseits mit dem Tiefpaßfilter 34 andererseits mit einem Umschalter 356 verbunden. Die Demodulationseinrichtung 35 enthält ferner einen Hilfssignalgenerator 354, einen Phasenmodulator 355 und den Umschalter 356. Die Auswerteeinrichtung 3 enthält zudem einen Trägersignalgenerator 31, ein Phasenversatzglied 311 und einen Umschalter 312.

Der Trägersignalgenerator 31 beaufschlagt die Sendeantenne 11 mit einem Trägersignal t1. Das dadurch von der Sendeantenne 11 abgegebene Meßfeld wird durch ein zu erkennendes Objekt in der Phase moduliert, vorzugsweise mit einem objektspezifischen Signal. Die erste Empfangsantenne 12 liefert das derart modulierte Trägersignal t1 als Eingangssignal e1 der Auswerteeinrichtung an den Multiplexer 32. Das Eingangssignal e1 wird im Verstärker 33 verstärkt und im Tiefpaßfilter 34 von hochfrequenten Störsignalanteilen befreit. Die Grenzfrequenz des Tiefpaßfilters 34 ist in jedem Fall höher als die Frequenz des Trägersignals t1.

Das derart aufbereitete Eingangssignal el durchläuft im folgenden die Demodulationseinrichtung 35. Im Multiplizierer 351 wird das Eingangssignal e1 mit einem weiteren Signal multipliziert, insbesondere mit dem Trägersignal t1 des Trägersignalgenerators 31. Soll das Trägersignal t1 am Multiplizierer 351 anliegen, so sind die durch den Auswerter 37 steuerbaren Umschalter 312 und 356 gemäß Figur 1 einzustellen.

In der beschriebenen Vorrichtung wird das durch die Sendeantenne 11 ausgegebene Meßfeld phasenmoduliert, so daß bei Vorliegen eines Objektes das Eingangssignal e1 dem phasenmodulierten Trägersignal t1 entspricht. Zur Demodulation des derart phasenmodulierten Trägersignals t1 wird selbiges mit dem Trägersignal t1 multipliziert, sodaß die Phasenmodulation in eine Amplitudenmodulation umgesetzt wird. Phasenänderungen im Eingangssignal e1 äußern sich im Signal am Ausgang des Multiplizierers 351 in einem niederfrequenten Signalanteil, der damit die Information trägt. Um den niederfrequenten Signalanteil des Signals am Ausgang des Multiplizieres 351 als Nutzsignal n1 zu gewinnen, werden die hochfrequenten Trägeranteile dieses Signals durch das Tiefpaßfilter 352 ausgefiltert, dessen Grenzfrequenz unterhalb der Frequenz des Trägersignals t1 angesiedelt ist. Aufgrund von nicht beeinflußbaren Phasenverschiebungen zwischen Eingangssignal e1 und Trägersignal t1 weist das Signal am Ausgang des Tiefpaßfilters 352 einen Gleichanteil auf. Dieser wird durch das Hochpaßfilter 353 entfernt, so daß am Ausgang des Hochpaßfilters 353 als Ausgang der Demodulationseinrichtung 35 ein von Störungen, Trägerschwingungen und Gleichanteilen befreites Nutzsignal n1 dem weiteren Verstärker 36 zugeführt und dort verstärkt wird. Daraufhin wird das Signal n1 im Auswerter 37 ausgewertet. Erkennt der Auswerter 37 im Nutzsignal nl eine Signalform, die auf eine entsprechende Modulation des Trägersignals t1 durch ein zu erkennendes Objekt rückschließen läßt - weist also zum Beispiel dabei das Nutzsignal wesentliche Amplitudenänderungen mit einer bestimmten Frequenz auf, die durch Phasenmodulation des Trägersignals t1 mit der selben Frequenz durch einen Resonator im zu erkennenden Kindersitz hervorgerufen sind - so liefert der Auswerter 37 ein erstes Ausgangssignal al an das Airbag-Steuergerät 4. Erlaubt die Vorrichtung, daß nicht nur die Existenz eines Kindersitzes nachgewiesen werden kann sondern auch seine Ausrichtung oder Position, so kann der Auswerter 37 selbstverständlich anstelle des ersten Ausgangssignals a1 ein um vielfach differenzierter ausgebildetes Signal an das Airbag-Steuergerät 4 liefern. Für gewöhnlich wird das Airbag-Steuergerät 4 bei Empfang des ersten Ausgangssignals a1 veranlassen, ein Auslösen des zugehörigen Airbags zu verhindern.

Erkennt der Auswerter 37 jedoch, daß das Nutzsignal n1 nicht oder nicht ausreichend das Vorhandensein eines Kindersitzes kennzeichnet, so veranlaßt er, daß durch entsprechende Steuerung des Umschalters 356 das von der Empfangsantenne 12 gelieferte Eingangssignal e1 im Multiplizierer 351 anstelle mit dem Trägersignal t1 mit einem anderen Signal, insbesondere dem modulierten Trägersignal mtl multipliziert wird. Zum Erzeugen des modulierten Trägersignals mt1 wird das Trägersignal t1 des Trägersignalgenerators 31 in einem Phasenmodulator 355 mit dem Hilfssignal h1 moduliert. Das modulierte Trägersignal mt1 wird im Multiplizierer 351 mit dem Eingangssignal e1 multipliziert und durchläuft ebenfalls das Bandpaßfilter 352 und 353, so daß es am Ausgang der Demodulationseinrichtung 35 als Prüfsignal p1 zur Auswertung durch den Auswerter 37 zur Verfügung steht. Erkennt der Auswerter 37, daß das Prüfsignal p1 das Hilfssignal h1 enthält, so liefert er das zweite Ausgangssignal a2, als Zeichen dafür, daß die Vorrichtung einwandfrei arbeitet und kein Kindersitz erkannt wurde. Wird das Hilfssignal h1 nicht im Prüfsignal p1 erkannt, so liefert der Auswerter 37 das dritte Ausgangssignal a3 mit der Nachricht, daß die Vorrichtung einen Defekt aufweist.

In erstem Fall liefert die Empfangsantenne 12 als Eingangssignal e1 das Trägersignal t1 (gegebenenfalls amplitudengedämpft), das dann im folgenden zur Demodulation des modulierten Trägersignals mt1 dient. Als Prüfsignal p1 liegt im folgenden das modulierende Hilfssignal h1 vor. Ist jedoch beispielsweise die Sendeantenne 11 oder die Empfangsantenne 12 infolge mechanische Krafteinwirkung auf den Fahrzeugsitz defekt, so wird beispielsweise ein Nullsignal als Eingangssignal e1 an die Demodulationseinrichtung 35 geliefert, welches als Prüfsignal p1 einwandfrei von einem Prüfsignal p1 bei nicht vorhandenem Kindersitz aber funktionstüchtiger Vorrichtung unterschieden werden kann.

Das Airbag-Steuergerät 4 wird bei Erkennen des zweiten Ausgangssignals a2 den zu steuernden Airbag im Falle eines ausreichend schweren Aufpralls freigeben. Meldet die Auswerteeinrichtung 3 das dritte Ausgangssignal a3 an das Airbag-Steuergerät, so wird eine optische oder akustische Warnvorrichtung betätigt und damit der Insasse auf die Funktionsuntüchtigkeit seiner Kindersitzerkennung hingewiesen.

Vorzugsweise enthält die Auswerteeinrichtung 3 ein Phasenversatzglied 311, um die Phase des Trägersignals t1 um einen festgelegten Betrag zu verschieben. Dieser Phasenversatz wird mit Hilfe des Umschalters 312 durch den Auswerter 37 gesteuert. Zusätzlich zu der durch die Phasenmodulation des Resonators hervorgerufenen Phase im Eingangssignal e1 bezogen auf das Trägersignal t1 ist eine weitere Phase zwischen Eingangssignal e1 und dem zur Demodulation und da insbesondere zur Multiplikation mit dem Eingangssignal e1 herangezogenen Trägersignal t1 vorhanden. Diese Phase resultiert aus Störeinflüssen, zum Beispiel aus der Anordnung von Metallgegenständen in der Umgebung der Antennenanordnung 1. Diese nicht vorhersehbare Phase kann bewirken, daß das von der Demodulationseinrichtung 35 gelieferte Nutz- beziehungsweise Prüfsignal n1 beziehungsweise p1 in einem Arbeitspunkt liegt, der eine äußerst geringe Empfindlichkeit für die Information enthaltenden Amplitudenänderungen im Nutzsignal n1 beziehungsweise Prüfsignal p1 enthält. Durch die schaltbare Phasenänderung im zur Demodulation verwendeten Trägersignals t1 kann für das Nutz- beziehungsweise Prüfsignal n1 beziehungsweise p1 ein anderer Arbeitspunkt erreicht werden, der eine größere Empfindlichkeit für Amplitudenänderungen im Signal gewährleistet.

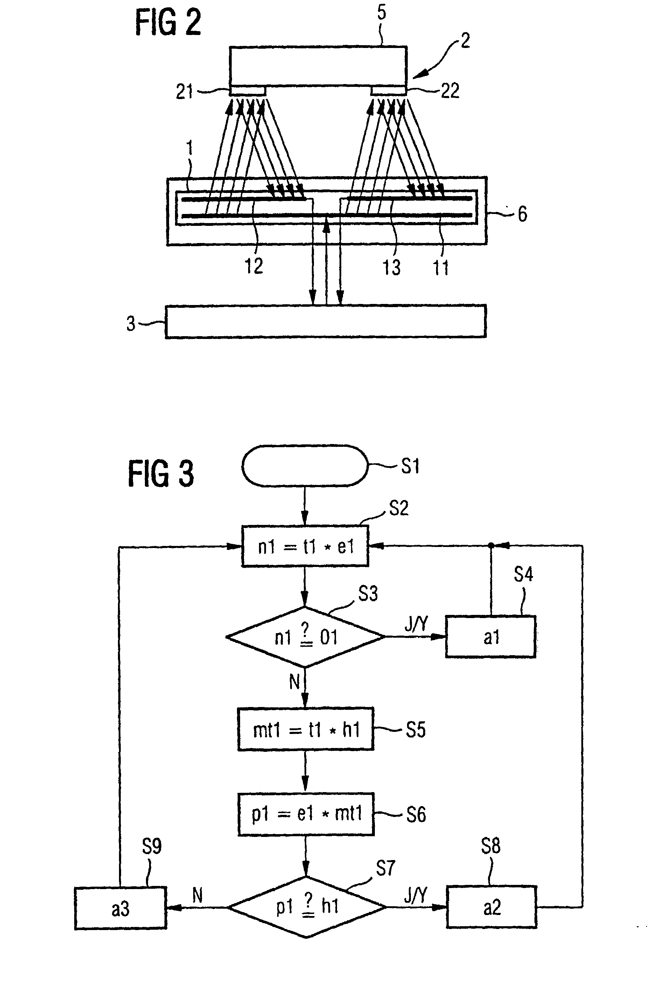

Figur 2 zeigt die Wirkungsweise der erfindungsgemäßen Vorrichtung nach Figur 1. In einem Fahrzeugsitz 6 ist die Antennenanordnung 1 mit der Sendeantenne 11 und den Empfangsantennen 12 und 13 angeordnet. Die räumliche Anordnung der Empfangsantennen 12, 13 und der Sendeantenne 11 zueinander verdeutlicht deren magnetische Kopplung. Empfangsantennen 12, 13 und Sendeantenne 11 liefern Signale an beziehungsweise werden gesteuert durch die Auswerteeinrichtung 3, die im Fahrzeugsitz 6 zusammen mit der Antennenvorrichtung 1 angeordnet sein kann. Über dem Fahrzeugsitz 6 ist schematisch ein Kindersitz 5 mit Resonatoren 2, insbesondere einem linksseitig angeordneten ersten Resonator 21 und einem rechtsseitig angeordneten zweiten Resonator 22 gezeigt. Signale der Sendeantenne 12 - durch Pfeile angedeutet - werden von den Resonatoren 21, 22 in entsprechender Weise beeinflußt und von den Empfangsantennen 12 beziehungsweise 13 aufgenommen.

Figur 3 zeigt ein Ablaufdiagramm für das erfindungsgemäße Verfahren. Nach Initialisierung im Schritt S1 wird das am Ausgang der Demodulationseinrichtung 35 anliegende Nutzsignal n1 aus dem an einem Eingang der Auswerteeinrichtung 3 anliegenden Eingangssignal e1 und dem Trägersignal t1 in einem Schritt S2 berechnet. Daraufhin wird in einem Schritt S3 vorzugsweise durch den Auswerter 37 überprüft, ob im Signal n1 ein Signalmuster erkannt wird, vorzugsweise ein objektspezifisches Signal o1, das auf einen Kindersitz in Umgebung der Vorrichtung schließen läßt. Ist dies der Fall -J/Y, wird ein erstes Ausgangssignal a1 durch den Auswerter 37 im Schritt S4 erzeugt und erneut, vorzugsweise nach dem Verstreichen einer festgelegten Zeitspanne, das Nutzsignal n1 erzeugt. Läßt das Nutzsignal n1 im Schritt S3 nicht auf einen Kindersitz KS schließen - N, so wird durch den Auswerter 37 veranlaßt, daß anstelle des Trägersignals t1 das modulierte Trägersignal mt1 zum Demodulieren des Eingangssignals e1 herangezogen wird. Dabei berechnet sich im Schritt S5 das modulierte Trägersignal mt1 aus einer Multiplikation des Trägersignals t1 mit einem Hilfssignal h1 im Sinne einer Modulation. In Schritt S6 wird im Multiplizierer 351 daraufhin das Prüfsignal p1 durch Multiplikationen im Sinne einer Demodulation aus dem Wert des Eingangssignals e1 und dem Modulierten Trägersignal mt1 gebildet. In Schritt S7 wird das Prüfsignal p1 mit dem Hilfssignal h1 verglichen. Ist das Hilfssignal h1 im Prüfsignal p1 enthalten - J/Y - so wird durch den Auswerter 37 das zweite Auswertesignal a2 im Schritt S8 abgegeben, andernfalls - N - wird das dritte Ausgangssignal a3 im Schritt S9 erzeugt. In beiden Fällen erfolgt eine weitere Demodulation des Eingangssignals e1 mit Hilfe des Trägersignals t1.

Es versteht sich, daß zahlreiche Abänderungen möglich sind: Anstelle der vorbeschriebenen Phasenmodulation kann eine Frequenz- oder Amplitudenmodulation vorliegen. Die von dem Auswerter 37 gelieferten Ausgangssignale a1 bis a3 sind im Sinne von Nachrichten zu verstehen, die zur Übertragung an die Airbag-Steuereinheit 4 in modulierter Signalform vorliegen oder sonstwie codiert sein können.

## Patentansprüche

1. Auswerteeinrichtung zur Verwendung in einer Vorrichtung zur Objekterkennung insbesondere zur Innenraumüberwachung für ein Kraftfahrzeug,
• mit einer Demodulationseinrichtung (35), der an einem ersten Eingang ein erstes Eingangssignal (e1) zugeführt wird und die an ihrem Ausgang ein Nutzsignal (n1) bereitstellt,
• mit einem Trägersignalgenerator (31), der mit einem zweiten Eingang der Demodulationseinrichtung (35) verbunden ist, und
• mit einem Auswerter (37), der mit dem Ausgang der Demodulationseinrichtung (35) verbunden ist und der derart ausgebildet ist, dass er das Objekt erkennt, wenn das Nutzsignal (n1) ein objektspezifisches Signal (o1) enthält,
**dadurch gekennzeichnet,**
• **dass** der Trägersignalgenerator (31) sowohl mit einem ersten Eingang eines ansteuerbaren Umschalters (356) als auch über einen Modulator (355), dem ein Hilfssignal (h1) zugeführt wird, mit einem zweiten Eingang des Umschalters (356) verbunden ist, und ein Ausgang des Umschalters (356) mit einem Eingang eines Multiplizierers (351) der Demodulationseinrichtung (35) verbunden ist,
• **dass** die Demodulationseinrichtung (35) abhängig von der Stellung des Umschalters (356) das Nutzsignal (n1) oder ein Prüfsignal (p1) an ihrem Ausgang bereitstellt, und
• **dass** der Auswerter (37) derart ausgebildet ist, dass er ein erstes Ausgangssignal (a1) bereitstellt, wenn das Nutzsignal (n1) ein objektspezifisches Signal (o1) enthält und dass er den Umschalter (356) ansteuert und von einer ersten in eine zweite Stellung bringt, wenn das Nutzsignal das objektspezifische Signal (o1) nicht enthält und abhängig davon, ob das dann am Ausgang der Demodulationseinrichtung (35) bereitgestellte Prüfsignal (p1) das Hilfssignal (h1) enthält oder nicht ein zweites (a2) oder ein drittes (a3) Ausgangssignal bereitstellt, die anzeigen, ob die Auswerteeinrichtung in Ordnung ist oder nicht.

2. Auswerteeinrichtung nach Anspruch 1, bei der der Multiplizierer (351) der Demodulationseinrichtung (35) das Eingangssignal (e1) mit dem Trägersignal (t1) multipliziert, und das Eingangssignal (e1) mit dem modulierten Trägersignal (mt1) multipliziert.

3. Auswerteeinrichtung nach Anspruch 2, bei der die Demodulationseinrichtung (35) ein dem Multiplizierer (351) nachgeschaltetes Tiefpaßfilter (352) enthält.

4. Auswerteeinrichtung nach einem der vorhergehenden Ansprüche, bei der die Demodulationseinrichtung (35) zur Demodulation eines phasenmodulierten Eingangssignals (e1) ausgebildet ist.

5. Auswerteeinrichtung nach einem der Ansprüche 1 bis 4, bei der die Demodulationseinrichtung (35) zur Demodulation eines amplitudenmodulierten Eingangssignals (e1) ausgebildet ist.

6. Auswerteeinrichtung nach Anspruch 4, bei der der Phasenwinkel des hochfrequenten Trägersignals (t1) um einen festgelegten Betrag änderbar ist.

7. Auswerteeinrichtung nach einem der vorhergehenden Anspüche, bei der das zu erkennende Objekt ein Insasse eines Fahrzeuges ist.

8. Auswerteeinrichtung nach einem der vorhergehenden Ansprüche, bei der das zu erkennende Objekt ein auf einem Fahrzeugsitz angeordneter Kindersitz ist.

9. Vorrichtung zur Objekterkennung, insbesondere zur Innenraumüberwachung für ein Kraftfahrzeug, mit einer Auswerteeinrichtung (3) nach einem der vorhergehenden Ansprüche, bei der eine Empfangsantenne (12) das erste Eingangssignal (e1) für die Auswerteeinrichtung (3) liefert.

10. Vorrichtung nach Anspruch 9, bei der eine ein elektromagnetisches Meßfeld ausgebende Sendeantenne (11) magnetisch mit der Empfangsantenne (12) gekoppelt ist.

11. Verfahren zum Steuern einer Vorrichtung zur Objekterkennung, insbesondere zur Innenraumüberwachung für ein Kraftfahrzeug,
bei dem ein Trägersignal (t1) über eine Sendeantenne (11) der Vorrichtung ausgegeben wird, das Trägersignal (t1) durch das zu erkennende Objekt mit einem objektspezifischen Signal (o1) moduliert wird, das modulierte Trägersignal von einer mit der Sendeantenne (11) gekoppelten Empfangsantenne (12,13) als Eingangssignal (e1) aufgenommen wird, das Eingangssignal (e1) mit dem Trägersignal (t1) demoduliert wird, und das Objekt erkannt wird, wenn das mit dem Trägersignal demodulierte Eingangssignal (n1) das objektspezifische Signal (o1) enthält,
bei dem das Eingangssignal (e1) mit einem mit einem Hilfssignal (h1) modulierten Trägersignal (mt1) demoduliert wird, wenn das mit dem Trägersignal demodulierte Eingangssignal (n1) das objektspezifische Signal (o1) nicht enthält, und eine Funktionsstörung erkannt wird, wenn das mit dem modulierten Trägersignal demodulierte Eingangssignal (p1) das Hilfssignal (h1) nicht enthält.

## Claims

1. Evaluation device for use in a device for object detection, particularly for monitoring the interior of a motor vehicle,
• having a demodulation device (35) to which a first input signal (e1) is supplied at a first input and which provides an information signal (n1) at its output,
• having a carrier signal generator (31) which is connected to a second input of the demodulation device (35), and
• having an evaluator (37) which is connected to the output of the demodulation device (35) and is implemented in such a way that it detects the object if the information signal (n1) contains an object-specific signal (o1),
**characterised in that**
• the carrier signal generator (31) is connected both to a first input of a controllable changeover switch (356) and also, via a modulator (355) to which an auxiliary signal (h1) is supplied, to a second input of the changeover switch (356), and an output of the changeover switch (356) is connected to the first input of the demodulation device (35),
• the demodulation device (35) provides the information signal (n1) or a test signal (p1) at its output depending on the setting of the changeover switch (356), and
• the evaluator (37) is implemented such that it provides a first output signal (a1) if the information signal (n1) contains an object-specific signal (o1) and that it selects the changeover switch (356) and changes it from a first into a second position if the information signal does not contain the object-specific signal (o1) and, depending on whether the test signal (p1) then provided at the output of the demodulation device (35) contains the auxiliary signal (h1) or not, provides a second (a2) or a third (a3) output signal which indicate whether the evaluation device is functioning properly or not.

2. Evaluation device according to Claim 1, in which the demodulation device (35) features a multiplier (351) which multiplies the first input signal (e1) with the carrier signal (t1), and which multiplies the input signal (e1) with the modulated carrier signal (mt1).

3. Evaluation device according to Claim 2, in which the demodulation device (35) contains a low-pass filter (352) connected in series after the multiplier (351).

4. Evaluation device according to one of the preceding claims, in which the demodulation device (35) is implemented such that the first input signal (e1) is phase-modulated.

5. Evaluation device according to one of Claims 1 to 4, in which the demodulation device (35) is implemented such that the first input signal (e1) is amplitude-modulated.

6. Evaluation device according to Claim 4, in which the phase angle of the high-frequency carrier signal (t1) can be adjusted by a specified amount.

7. Evaluation device according to one of the preceding claims, in which the object to be detected is an occupant of a motor vehicle.

8. Evaluation device according to one of the preceding claims, in which the object to be detected is a child seat disposed on a vehicle seat.

9. Device for object detection, particularly for monitoring the interior of a motor vehicle, having an evaluation device (3) according to one of the preceding claims, in which a receive antenna (12) supplies the first input signal (e1) for the evaluation device (3).

10. Device according to Claim 9, in which a transmit antenna (11) emitting an electromagnetic measurement field is magnetically coupled to the receive antenna (12).

11. Method for controlling a device for object detection, particularly for monitoring the interior of a motor vehicle,
in which a first carrier signal (t1) is emitted via a transmit antenna (11) of the detection device, the first carrier signal (t1) is modulated by the object to be detected by means of an object-specific signal (o1), the modulated first carrier signal is received as an input signal (e1) by a receive antenna (12, 13) coupled to the transmit antenna (11), the input signal (e1) is demodulated by means of the first carrier signal (t1), and the object is detected if the input signal (n1) demodulated by means of the carrier signal contains the object-specific signal (o1),
in which the input signal (e1) is demodulated by means of a second carrier signal modulated by means of an auxiliary signal (h1) if the input signal (n1) demodulated by means of the carrier signal does not contain the object-specific signal (o1) and a malfunction is detected if the input signal (p1) demodulated by means of the modulated second carrier signal does not contain the auxiliary signal (h1).

## Revendications

1. Dispositif d'analyse à utiliser dans un équipement pour la détection d'objets, en particulier pour la surveillance de l'intérieur d'un véhicule automobile,
• avec un dispositif de démodulation (35) à une première entrée duquel est transmis un premier signal d'entrée (e1) et qui génère à sa sortie un signal utile (n1),
• avec un générateur de signaux porteurs (31) qui est relié avec une deuxième entrée du dispositif de démodulation (35), et
• avec un analyseur (37) qui est relié avec la sortie du dispositif de démodulation (35) et qui est constitué de telle manière qu'il détecte l'objet lorsque le signal utile (n1) contient un signal spécifique à l'objet (o1),
**caractérisé en ce que**
• le générateur de signaux porteurs (31) est relié aussi bien avec une première entrée d'un commutateur contrôlable (356) que, par un modulateur (355) auquel est transmis un signal auxiliaire (h1), avec une deuxième entrée du commutateur (356), et une sortie du commutateur (356) est reliée avec une entrée d'un multiplicateur (351) du dispositif de démodulation (35),
• le dispositif de démodulation (35) produit à sa sortie, selon la position du commutateur (356), le signal utile (n1) ou le signal de contrôle (p1), et
• l'analyseur (37) est constitué de telle sorte qu'il produit un premier signal de sortie (a1) lorsque le signal utile (n1) contient un signal spécifique à l'objet (o1), et qu'il contrôle le commutateur (356) et le fait passer d'une première à une deuxième position lorsque le signal utile (n1) ne contient pas le signal spécifique à l'objet (o1), et, selon que le signal de contrôle (p1) produit à la sortie du dispositif de démodulation (35) contient ou non le signal auxiliaire (h1), produit un deuxième (a2) ou un troisième (a3) signal de sortie qui indiquent si le dispositif d'analyse est en bon état ou non.

2. Dispositif d'analyse selon la revendication 1, dans lequel le multiplicateur (351) du dispositif de démodulation (35) multiplie le signal d'entrée (e1) avec le signal porteur (t1), et multiplie le signal d'entrée (e1) avec le signal porteur modulé (mt1).

3. Dispositif d'analyse selon la revendication 2, dans lequel le dispositif de démodulation (35) contient un filtre passe-bas (352) monté en aval du multiplicateur (351).

4. Dispositif d'analyse selon l'une des revendications précédentes, dans lequel le dispositif de démodulation (35) est conçu pour la démodulation d'un signal d'entrée (e1) modulé en phase.

5. Dispositif d'analyse selon l'une des revendications 1 à 4, dans lequel le dispositif de démodulation (35) est conçu pour la démodulation d'un signal d'entrée (e1) modulé en amplitude.

6. Dispositif d'analyse selon la revendication 4, dans lequel l'angle de phase du signal porteur à haute fréquence (t1) est variable d'une quantité définie.

7. Dispositif d'analyse selon l'une des revendications précédentes, dans lequel l'objet à détecter est un occupant d'un véhicule.

8. Dispositif d'analyse selon l'une des revendications précédentes, dans lequel l'objet à détecter est un siège pour bébé installé sur un siège de véhicule.

9. Equipement pour la détection d'objets, en particulier pour la surveillance de l'intérieur d'un véhicule automobile, avec un dispositif d'analyse (3) selon l'une des revendications précédentes, dans lequel une antenne réceptrice (12) émet le premier signal d'entrée (e1) pour le dispositif d'analyse (3).

10. Equipement selon la revendication 9, dans lequel une antenne émettrice (11) émettant un champ de mesure électromagnétique est couplée magnétiquement avec l'antenne réceptrice (12).

11. Procédé pour le contrôle d'un équipement pour la détection d'objets, en particulier pour la surveillance de l'intérieur d'un véhicule automobile,
dans lequel un signal porteur (t1) est émis par une antenne émettrice (11) de l'équipement, le signal porteur (t1) est modulé par l'objet à détecter avec un signal spécifique à l'objet (o1), le signal porteur modulé est reçu comme signal d'entrée (e1) par une antenne réceptrice (12, 13) couplée avec l'antenne émettrice (11), le signal d'entrée (e1) est démodulé avec le signal porteur (t1), et l'objet est détecté si le signal d'entrée (n1) démodulé avec le signal porteur contient le signal spécifique à l'objet (o1),
dans lequel le signal d'entrée (e1) est démodulé avec un signal porteur (mt1) modulé avec un signal auxiliaire (h1) si le signal d'entrée (n1) démodulé avec le signal porteur ne contient pas le signal spécifique à l'objet (o1), et un dysfonctionnement est détecté si le signal d'entrée (p1) démodulé avec le signal porteur modulé ne contient pas le signal auxiliaire (h1).
